# DEMANDE DE BREVET EUROPEEN

(11) **EP 4 850 810 A1**
(43) Date de publication de la demande: **09.12.2026**
(21) Numéro de dépôt: 26182174.8
(22) Date de dépôt: 01.06.2026
(51) Int. Cl.: B01J 20/30

(54) **PROCÉDÉ DE PRÉPARATION D'UN DISPOSITIF DE FILTRATION OU D'EXTRACTION, LEDIT DISPOSITIF ET SES UTILISATIONS**

(30) Priorité: 03.06.2025 FR 2505974
(71) Demandeur: Commissariat à l'Energie Atomique et aux Energies Alternatives, 75015 Paris (FR)
(72) Inventeur: POULESQUEN, Arnaud, 30133 LES ANGLES (FR); PIALLAT, Thomas, 13160 CHATEAURENARD (FR); LACAMBRA ANDREU, Francesc Xavier, 84000 AVIGNON (FR)
(74) Mandataire: Santarelli

(57) **Abrégé**

La présente invention concerne un procédé de préparation d'un dispositif de filtration ou d'extraction comprenant un monolithe en géopolymère macroporeux et mésoporeux, contenu dans un support métallique comportant au moins les étapes suivantes : (a) préparer un monolithe en géopolymère macroporeux et mésoporeux par impression 3D à partir d'un premier mélange géopolymérique ; (b) introduire, dans un support métallique, le monolithe en géopolymère macroporeux et mésoporeux préparé à l'étape a) ; puis (c) garnir l'espace vide entre la surface interne du support métallique et le monolithe en géopolymère macroporeux et mésoporeux par un deuxième mélange géopolymérique moyennant quoi, après durcissement dudit deuxième mélange géopolymérique, un dispositif de filtration ou d'extraction comprenant un monolithe en géopolymère macroporeux et mésoporeux, contenu dans un support métallique est obtenu. La présente invention concerne ledit dispositif de filtration ou d'extraction et ses utilisations pour séparer au moins un ion d'un flux le contenant.

## Description

### DOMAINE TECHNIQUE

La présente invention concerne le domaine général des dispositifs de filtration ou d'extraction et notamment des dispositifs de filtration ou d'extraction dont le matériau filtrant ou extractant est essentiellement minéral.

Plus particulièrement, la présente invention propose un procédé de fabrication d'un dispositif comprenant un filtre monolithique en géopolymère éventuellement fonctionnalisé, optimisé pour la filtration et l'extraction d'ions solubles. Ce procédé repose sur l'impression 3D d'un mélange géopolymèrique ou pâte de géopolymère, suivie d'une intégration dans un support métallique tel qu'une cartouche métallique assurant une mise en œuvre simple et efficace.

La présente invention concerne également le dispositif de filtration et d'extraction ainsi fabriqué et ses utilisations pour filtrer et extraire des ions organiques ou inorganiques, contenus dans un fluide gazeux ou un fluide liquide comme une solution aqueuse ou organique.

### ÉTAT DE LA TECHNIQUE ANTÉRIEURE

Les filtres monolithiques à base de géopolymères sont déjà connus pour la filtration et l'extraction d'ions solubles et plusieurs procédés ont été développés pour fabriquer de tels filtres.

Les technologies existantes se concentrent sur essentiellement trois méthodes de mise en forme des géopolymères suivantes avec (1) les colonnes granulaires ou en poudre, (2) le moussage ou casting de géopolymères et (3) l'impression 3D de géopolymères.

Les colonnes granulaires ou en poudre sont typiquement utilisées pour l'échange ionique et l'adsorption.

A titre d'exemple, la demande internationale WO 2024/126963 **[1]** décrit un procédé de fabrication de matériaux géopolymères pour la décontamination des cations du strontium (Sr) dans des effluents aqueux. Ce procédé repose sur la synthèse d'un monolithe à partir de zéolithes, silicate de potassium et métakaolin, suivi d'un broyage et d'un tamisage pour obtenir des grains de taille contrôlée.

Les étapes de broyage et de tamisage sont des étapes supplémentaires, nécessaires pour confiner les particules fines, ce qui augmente les coûts, les temps de production et les contraintes opérationnelles. A noter une perte d'entre 40% et 60% de matière pendant les étapes de broyage et de tamisage, notamment à cause de la production de fines.

En variante, le brevet CN 107973559 B **[2]** présente un procédé de production de billes de géopolymère par goutte-à-goutte dans un bain de polydiméthylsiloxane (PDMS) sous agitation à haute vitesse. Une étape de curation dans le bain, suivie d'une filtration et d'une calcination, permet d'obtenir des billes poreuses de géopolymère.

Le fort cisaillement dans le bain entraîne une distribution granulométrique large et non maîtrisée. L'élimination du PDMS par filtration et calcination ajoute des étapes de production et la phase de curation et de calcination augmente les coûts énergétiques.

Enfin, lors de leur utilisation en colonne, l'installation d'une grille métallique fine en entrée/sortie de la cartouche filtrante est nécessaire pour éviter la migration, dans le bac de récupération du fluide décontaminé, des particules filtrantes et des billes respectivement produites par les procédés décrits dans **[1]** et **[2].**

Les techniques de moussage ou casting de géopolymères telles que décrites, notamment, dans le brevet FR 3037583 B1 **[3]** permettent d'obtenir des matériaux poreux, mais la porosité obtenue est difficilement contrôlable ne permettant pas d'obtenir une homogénéité du réseau poreux. Cela peut entraîner des chemins préférentiels d'écoulement qui réduisent l'efficacité des échanges ioniques et donc du traitement des effluents. De plus, il existe une fragilité mécanique due à la distribution de pores aléatoires. A cause de cette fragilité, la pression du fluide peut engendrer la fracturation et entraîner un bouchage du filtre ou l'éjection des particules du filtre dans le bac de récupération du fluide décontaminé.

La technologie d'impression 3D de géopolymère, encore en phase de recherche scientifique, permet de fabriquer des structures poreuses fonctionnalisées. Cependant, les études actuelles se focalisent principalement sur des applications spécifiques à petite échelle, sans prendre en compte les contraintes d'industrialisation.

L'étude de Franchin et *al*, 2020 **[4]** compare différentes techniques de fabrication de filtres en géopolymère pour le traitement de l'eau. Les méthodes étudiées comprennent l'impression 3D, le moussage direct et la granulation, avec une évaluation des performances de filtration et de fonctionnalisation des matériaux par ajout de particules d'argent ou de cuivre. Dans ce travail, l'élimination de l'ammonium est étudiée. Elle met en évidence les avantages de l'impression 3D en termes de contrôle de la géométrie et de la fonctionnalisation des matériaux. En revanche, ces filtres font moins de 1 cm d'hauteur, la formulation utilisée limite les possibilités géométriques finales. Ils présentent nettement moins de perméabilité à l'eau, porosité et absorption que les filtres fabriqués par granulation ou moussage.

En résumé, les procédés actuellement mis en œuvre pour fabriquer des filtres monolithiques à base de géopolymères notamment pour la filtration et l'extraction d'ions solubles présentent encore des limites en termes de contrôle de la porosité, de robustesse mécanique et d'intégration industrielle.

Par conséquent, les inventeurs se sont fixé pour but de proposer un procédé de fabrication d'un dispositif de filtration et d'extraction dont le matériau actif est un géopolymère éventuellement fonctionnalisé, procédé qui soit compatible avec une mise à l'échelle industrielle, permettant la production de filtres de plusieurs centimètres de hauteur tout en maintenant une géométrie et une porosité contrôlées.

Les inventeurs se sont également fixé pour but de proposer un procédé de fabrication d'un dispositif de filtration et d'extraction dont le matériau actif est un géopolymère éventuellement fonctionnalisé permettant d'obtenir un dispositif simple, durable et présentant des propriétés mécaniques améliorées et une plus grande perméabilité à l'eau et aux fluides, notamment en contrôlant précisément la hiérarchie des pores.

### EXPOSÉ DE L'INVENTION

La présente invention permet d'atteindre le but que se sont fixé les inventeurs. En effet, les inventeurs ont montré que la préparation d'un filtre se présentant sous forme d'un monolithe en un géopolymère est compatible avec une mise à l'échelle industrielle, permettant la production de filtres de plusieurs centimètres de hauteur tout en maintenant une géométrie et une porosité contrôlées.

De plus, la formulation optimisée du mélange géopolymérique permet d'améliorer les propriétés mécaniques et d'assurer une meilleure résistance à l'effondrement lors de l'impression. Cette formulation optimisée combinée à l'impression 3D permet une plus grande perméabilité à l'eau et aux fluides liquides comme gazeux, en contrôlant précisément la hiérarchie des pores.

Le dispositif selon l'invention peut facilement âtre intégré dans des systèmes de filtration standard, avec une interface optimisée grâce à l'ajout d'un coulis géopolymérique entre le filtre imprimé et son support métallique pour une installation simple et durable.

Enfin, l'utilisation d'un géopolymère offre la possibilité soit d'incorporer des particules sélectives dans la formulation de la pâte de géopolymère d'impression ainsi que des additifs fonctionnels comme des particules d'argent, de cuivre ou d'autres agents actifs, soit de fonctionnaliser le filtre après sa préparation avec des éléments aptes à piéger, chélater et/ou complexer des ions d'intérêt permettant d'adapter le filtre aux exigences spécifiques de traitement des effluents liquides ou gazeux.

Plus particulièrement, la présente invention propose un procédé de préparation d'un dispositif de filtration ou d'extraction comprenant un monolithe en géopolymère macroporeux et mésoporeux, contenu dans un support métallique comportant au moins les étapes suivantes :
a) préparer un monolithe en géopolymère macroporeux et mésoporeux par impression 3D à partir d'un premier mélange géopolymérique ;
b) introduire, dans un support métallique, le monolithe en géopolymère macroporeux et mésoporeux préparé à l'étape a) ; puis
c) garnir (ou remplir) l'espace vide entre la surface interne du support métallique et le monolithe en géopolymère macroporeux et mésoporeux par un deuxième mélange géopolymérique moyennant quoi, après durcissement de ce deuxième mélange géopolymérique, un dispositif de filtration ou d'extraction comprenant un monolithe en géopolymère macroporeux et mésoporeux, contenu dans un support métallique est obtenu.

Par « monolithe », on entend un objet solide constitué d'un seul élément. Dans le cadre de la présente invention, cet élément est un géopolymère éventuellement fonctionnalisé.

Par « géopolymère », on entend, dans le cadre de la présente invention, un matériau solide et poreux à l'état sec, obtenu suite au durcissement d'un mélange contenant des matériaux finement broyés (i.e. la source alumino-silicatée) et une solution saline (i.e. la solution d'activation), ledit mélange étant capable de faire prise et de durcir au cours du temps. Ce mélange peut également être désigné sous les expressions « mélange géopolymérique », « composition géopolymérique », « coulis géopolymèrique » ou encore « pâte de géopolymère ». Le durcissement du géopolymère est le résultat de la dissolution/polycondensation des matériaux finement broyés dans la solution saline telle qu'une solution saline de fort pH (i.e. la solution d'activation).

Plus particulièrement, un géopolymère est un polymère inorganique alumino-silicaté amorphe. Ledit polymère est obtenu à partir d'un matériau réactif contenant essentiellement de la silice et de l'aluminium (i.e. la source alumino-silicatée), activé par une solution fortement alcaline, le rapport massique solide/solution dans la formulation étant faible. La structure d'un géopolymère est composée d'un réseau Si-O-Al formé de tétraèdres de silicates (SiO₄) et d'aluminates (AlO₄) liés en leurs sommets par partage d'atomes d'oxygène. Au sein de ce réseau, se trouve(nt) un ou plusieurs cation(s) compensateur(s) de charge également appelé(s) cation(s) de compensation qui permettent de compenser la charge négative du complexe AlO₄⁻. Ledit ou lesdits cation(s) de compensation est(sont) avantageusement choisi(s) dans le groupe constitué par les métaux alcalins tels que le lithium (Li), le sodium (Na), le potassium (K), le rubidium (Rb) et le césium (Cs) ; les métaux alcalino-terreux tels que le magnésium (Mg), le calcium (Ca), le strontium (Sr) et le barium (Ba) ; et leurs mélanges.

Un géopolymère possède une porosité intrinsèque mésoporeuse de l'ordre de 10 à 20% en volume par rapport au volume total du géopolymère, ce dernier pouvant également présenter des macropores non connectés. En d'autres termes, un géopolymère présente, du fait de son procédé de préparation, des mésopores connectés et éventuellement des macropores non connectés.

Toutefois, il est possible de préparer un géopolymère mésoporeux et macroporeux et notamment un géopolymère mésoporeux et macroporeux avec des macropores connectés, grâce à une étape d'impression 3D.

Par « mésopores », on entend des pores ou vides présentant un diamètre moyen compris entre 2 nm et 50 nm et notamment entre 2 nm et 20 nm. Par « macropores », on entend des pores ou vides présentant un diamètre moyen supérieur à 50 nm et notamment supérieur à 70 nm.

Dans le procédé selon l'invention, l'étape a) de préparation du monolithe en géopolymère macroporeux et mésoporeux par impression 3D à partir d'une première pâte de géopolymère comporte avantageusement les sous-étapes suivantes :
a₁) préparer un premier mélange géopolymérique ;
b₁) soumettre le premier mélange géopolymérique préparé à l'étape a₁) à une impression 3D ; et
c₁) laisser durcir le premier mélange géopolymérique imprimé à l'étape b₁) moyennant quoi un monolithe en géopolymère macroporeux et mésoporeux est obtenu.

L'étape a₁) du procédé selon la présente invention consiste à ajouter, à une solution d'activation préalablement préparée, au moins une source alumino-silicatée. Cette étape tout comme la préparation préalable de la solution d'activation sont des étapes classiques dans le domaine des géopolymères.

Les expressions « matériau réactif contenant essentiellement de la silice et de l'aluminium » et « source alumino-silicatée » sont, dans la présente invention, similaires et utilisables de façon interchangeable.

Le matériau réactif contenant essentiellement de la silice et de l'aluminium utilisable pour préparer le premier mélange géopolymérique mis en œuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc. ; des minéraux d'alumino-silicates naturels calcinés tels que le métakaolin ; des verres synthétiques à base d'alumino-silicates purs ; du ciment alumineux ; de la ponce ; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci. Dans un mode de réalisation particulier, le matériau réactif contenant essentiellement de la silice et de l'aluminium utilisé dans le premier mélange géopolymérique est du métakaolin.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse.

Les expressions « solution d'activation », « solution saline de fort pH » et « solution fortement alcaline » sont, dans la présente invention, similaires et utilisables de façon interchangeable.

Par « fortement alcaline » ou « de fort pH », on entend une solution dont le pH est supérieur à 9, notamment supérieur à 10, en particulier, supérieur à 11 et, plus particulièrement supérieur à 12. En d'autres termes, la solution d'activation présente une concentration en OH⁻ supérieure à 0,01 M, notamment supérieure à 0,1 M, en particulier supérieure à 1 M et, plus particulièrement, comprise entre 5 et 20 M.

De plus, la solution d'activation comprend le cation de compensation ou le mélange de cations de compensation sous forme d'une solution ionique ou d'un sel. Ainsi, la solution d'activation est notamment choisie parmi une solution aqueuse de silicate de sodium (Na₂SiO₃), de silicate de potassium (K₂SiO₂), d'hydroxyde de sodium (NaOH), d'hydroxyde de potassium (KOH), d'hydroxyde de calcium (Ca(OH)₂), d'hydroxyde de césium (CsOH) et leurs dérivés etc.

A noter que, dans le procédé selon l'invention, l'utilisation d'une solution d'activation dans laquelle le cation de compensation est du potassium peut permettre d'augmenter la mésoporosité du géopolymère formant le monolithe, comparée à celle d'un géopolymère préparé à partir d'une solution d'activation dans laquelle le cation de compensation est un cation différent du potassium tel que précédemment défini et notamment du sodium.

La solution d'activation peut éventuellement contenir un ou plusieurs composant(s) silicaté(s) notamment choisi(s) dans le groupe constitué par la silice, la silice colloïdale et la silice vitreuse. Lorsque la solution d'activation contient un ou plusieurs composant(s) silicaté(s), ce ou ces dernier(s) est(sont) présent(s) en une quantité comprise entre 100 mM et 10 M, notamment entre 500 mM et 8 M et, en particulier, entre 1 M et 6 M dans la solution d'activation.

La ou les source(s) alumino-silicatée(s) est/sont ajoutée(s) à la solution d'activation en une fois ou en plusieurs fois. Une fois la ou les source(s) alumino-silicatée(s) ajoutée(s) à la solution d'activation, la solution ou dispersion obtenue est mélangée en utilisant un malaxeur, un agitateur magnétique, un agitateur à hélice, un barreau magnétique, un bain à ultrasons ou un homogénéisateur. Le mélange/malaxage lors de la sous-étape a1) du procédé selon l'invention se fait à une vitesse de rotation du rotor du malaxeur, de l'agitateur magnétique ou de l'agitateur à hélice, inférieure ou égale à 1000 tr/min, notamment inférieure ou égale à 500 tr/min et, en particulier, de l'ordre de 300 tr/min (i.e. 300 tr/min ± 50 tr/min).

En tenant compte des éventuels composants silicatés que peut contenir la solution d'activation, la quantité de source(s) alumino-silicatée(s) est telle que le rapport molaire SiO₂/Al₂O₃ dans le géopolymère macroporeux et mésoporeux du monolithe est compris entre 2.8 et 4.2, notamment entre 3.2 et 4.0 et, en particulier, de l'ordre de 3.8 (i.e. 3.8 ± 0.1).

De plus, le rapport massique solution activation/MK avec solution d'activation représentant la masse de solution d'activation (exprimée en g) et MK représentant la masse de source alumino-silicatée (exprimée en g) utilisé est avantageusement compris entre 0.90 et 1.76 et notamment entre 1.01 et 1.47. A titre d'exemple particulier, le rapport solution activation/MK est de l'ordre de 1.30 (i.e. 1.30 ± 0.05).

Il peut être nécessaire d'augmenter la viscosité du mélange géopolymérique mis en œuvre lors de l'impression 3D (i.e. du premier mélange géopolymérique). A cet effet, au moins un agent viscosant peut être ajouté à ce mélange. Tout agent viscosant, organique ou non, connu de l'homme du métier peut être utilisé. A titre d'exemples particuliers de tels agents viscosants, on peut citer des polymères organiques comme du polyéthylène glycol, des fines ou des tensioactifs.

Les fines également appelées « fillers » ou « fines d'addition » sont un produit sec, finement divisé, issu de la taille, du sciage ou du travail de roches naturelles, de granulats et des pierres ornementales comme du marbre. Avantageusement, les fines présentent une dimension moyenne des grains comprise entre 2 µm et 200 µm et notamment entre 5 µm et 100 µm.

Les tensioactifs utilisables pour augmenter la viscosité du mélange géopolymérique sont notamment choisis parmi les tensioactifs anioniques, les tensioactifs cationiques, les tensioactifs zwittérioniques, les tensioactifs amphotères, et les tensioactifs neutres (non-ioniques). Plus particulièrement, les tensioactifs utilisables pour augmenter la viscosité du mélange géopolymérique sont choisis parmi les tensioactifs cationiques comme, par exemple, le bromure de cétyltriméthylammonium (CTAB).

La quantité d'agent(s) viscosant(s) utilisée dans le cadre de la présente invention dépendra grandement de la viscosité recherchée pour le mélange géopolymérique. L'homme du métier saura déterminer la quantité adéquate au moyen d'essais de routine. A titre d'exemple, l'agent ou les agents viscosant(s) est/sont présent(s) dans une proportion comprise entre 0,1% et 30%, notamment entre 0,5% et 20%, en particulier, entre 1% et 15% et, plus particulièrement, entre 1% et 7% en masse par rapport à la masse totale du mélange géopolymérique.

Dans un mode de réalisation particulier, le premier mélange géopolymérique comprend, comme agent viscosant, du polyéthylène glycol comme, par exemple, du PEG dont la masse moléculaire est de 1500 g/mol et des fines sous forme de particules de calcite (CaCO₃).

De par la formulation mise en œuvre, le premier mélange géopolymérique présente une viscosité et une contrainte seuil contrôlées pour assurer l'extrusion et la stabilité de la pièce pendant l'impression 3D et après fabrication. La contrainte seuil du filament constitué du premier mélange géopolymérique après sortie de buse est typiquement comprise entre 1 Pa et 3000 Pa, notamment entre 50 Pa et 2000 Pa et, en particulier, entre 300 Pa et 1000 Pa.

L'étape a₁) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure à 2 min, notamment comprise entre 4 min et 1 h et, en particulier, comprise entre 5 min et 15 min.

L'étape b₁) du procédé selon la présente invention consiste à soumettre le mélange géopolymérique obtenu à l'étape a₁) à une impression 3D. Cette dernière permet de conférer une forme donnée au géopolymère et notamment d'avoir un géopolymère macroporeux et mésoporeux se présentant sous forme d'un monolithe.

Tout appareillage utilisable pour une impression 3D est utilisable dans le cadre de la présente invention. A titre d'exemples illustratifs, on peut citer les imprimantes 3D des fournisseurs suivants : VormVrij, StoneFlower, Lynxter, 3D Potter et WASP.

Lors de l'impression 3D mise en œuvre dans le procédé selon l'invention, le monolithe est fabriqué de façon additive par extrusion du mélange géopolymérique. En d'autres termes, l'impression 3D consiste en un dépôt contrôlé du premier mélange géopolymérique, couche par couche, selon une architecture définie. Les canaux peuvent présenter des formes rectilignes, gyroïdes, nid d'abeille, alvéolaires ou autres.

L'impression 3D mise en œuvre dans le procédé selon l'invention permet un contrôle précis des pores ou vides dont le diamètre moyen varie entre 0,1 mm et 5 mm, notamment entre 0,2 mm et 2 mm et, en particulier, entre 0,3 mm et 1 mm moyennant quoi on obtient un monolithe présentant une porosité hiérarchisée avec des macropores pour le transport des fluides obtenus grâce au procédé d'impression 3D et des mésopores en tant que propriété intrinsèque du matériau géopolymère.

Par ailleurs, il va de soi que, lors de l'impression 3D, la forme du monolithe sera choisie de sorte à être adaptée au support métallique dans lequel le monolithe sera ultérieurement disposé. Avantageusement, la surface externe du monolithe est sensiblement complémentaire à la surface interne du support métallique. A titre d'exemple, lorsque la surface interne du support métallique est sensiblement cylindrique, la surface externe du monolithe est également sensiblement cylindrique.

L'homme du métier saura sélectionner, sans effort inventif, le diamètre de la buse à utiliser lors de l'impression 3D en fonction des dimensions finales souhaitées, de la résolution d'impression et de la taille des particules constituant le premier mélange géopolymérique. Le diamètre de la buse est typiquement compris entre 0,4 mm et 5 mm.

L'étape c₁) du procédé selon l'invention consiste à soumettre le mélange géopolymérique imprimé suite à l'étape b₁) à des conditions permettant son durcissement.

Toute technique connue de l'homme du métier pour faire durcir un mélange géopolymérique est utilisable lors de l'étape de durcissement du procédé.

Les conditions permettant le durcissement lors de l'étape c₁) comprennent avantageusement une étape de prise et une étape de séchage. Typiquement, l'étape de prise et l'étape de séchage sont réalisées dans des conditions ambiantes. Le temps de prise est compris entre 1 h et 24 h, notamment entre 3 h et 20 h et, en particulier, entre 5 h et 16 h.

Dans un mode de réalisation particulier, le monolithe en géopolymère macroporeux et mésoporeux peut être utilisé directement à l'issue de l'étape a) et notamment à l'issue de l'étape c₁).

Dans un autre mode de réalisation particulier, le monolithe en géopolymère macroporeux et mésoporeux peut être stocké avant mise en œuvre de l'étape b) du procédé. Avantageusement, ce stockage est réalisé à humidité et température contrôlées pour faciliter et/ou accélérer la géopolymérisation. Les temps de stockage peuvent varier de 1 à 365 jours à une température comprise entre 10°C et 70°C, notamment, entre 20°C et 60°C, en particulier, entre 20°C et 40°C. L'humidité lors du stockage peut être comprise entre 20% et 99%, notamment, entre 60% et 99% et, en particulier, entre 80% et 99%.

Lorsque le premier mélange géopolymérique contient un ou plusieurs composant(s) organique(s), il est possible d'éliminer ce ou ces composant(s) en soumettant le monolithe obtenu à l'issue de l'étape a) et notamment à l'issue de l'étape c₁) à une température supérieure à 300°C, avantageusement supérieure à 400°C, pendant un temps compris entre 15 min et 48 h, notamment entre 1 h et 24 h et, en particulier, entre 2 h et 12 h. Ce traitement thermique permet l'élimination efficace des composés organiques tout en préservant la structure macroporeuse et mésoporeuse du monolithe en géopolymère.

Dans une première forme de mise en œuvre, il est possible d'utiliser, dans un dispositif de filtration ou d'extraction, le monolithe en géopolymère macroporeux et mésoporeux sans le fonctionnaliser par des éléments capables de piéger, chélater et/ou complexer un ou plusieurs ion(s). En effet, il est connu que des géopolymères utilisés directement après synthèse peuvent extraire des ions tels que Cs⁺, Pb²⁺, Cu²⁺, Zn²⁺, Ni²⁺, Cd²⁺ ainsi que le bleu de méthylène.

Dans une deuxième forme de mise en œuvre, le monolithe en géopolymère macroporeux et mésoporeux doit être fonctionnalisé par des éléments capables de piéger, chélater et/ou complexer un ou plusieurs ion(s) en vue de son utilisation ultérieure dans un dispositif de filtration ou d'extraction.

Dans une première variante de cette deuxième forme de mise en œuvre, le premier mélange géopolymérique comprend au moins un élément capable de piéger, chélater et/ou complexer un ou plusieurs ion(s).

A noter que ce ou ces élément(s) capable(s) de piéger, chélater et/ou complexer un ou plusieurs ion(s) peuvent aussi avoir un effet viscosant.

Avantageusement, dans cette première variante, ce ou ces élément(s) capable(s) de piéger, chélater et/ou complexer un ou plusieurs ion(s) est/sont choisi(s) dans le groupe constitué par les particules de cuivre, les particules d'argent, les particules d'au moins un composé solide échangeur d'un cation métallique, des oxydes métalliques hydratés tels que l'oxyde de manganèse hydraté ou l'oxyde de fer hydraté, des hydroxydes doubles lamellaires (HDL), des nanoparticules de carbone éventuellement fonctionnalisées telles que des nanotubes de carbone ou graphène oxydé, ainsi que leurs mélanges.

En particulier, le composé solide échangeur d'un cation métallique peut être choisi dans le groupe constitué par les zéolithes ; les silicotitanates alcalins ; les particules de polymère de coordination (« *Metal-Organic Frameworks* » en anglais), et leurs mélanges.

Dans cette première variante, le ou les élément(s) capable(s) de piéger, chélater et/ou complexer un ou plusieurs ion(s) peu(ven)t être introduit(s) dans la solution d'activation telle que précédemment définie préalablement et/ou simultanément à l'addition de la ou des source(s) alumino-silicatée(s) telle(s) que précédemment définie(s) et/ou dans le premier mélange géopolymérique préalablement à l'étape c₁). L'homme du métier saura déterminer, sans effort inventif, la quantité du ou des élément(s) à utiliser.

Dans cette première variante, le ou les élément(s) capable(s) de piéger, chélater et/ou complexer un ou plusieurs ion(s) se trouvent, typiquement, adsorbé(s) ou retenu(s) au niveau des mésopores et/ou des macropores que comprend le monolithe en géopolymère macroporeux et mésoporeux.

Dans cette première variante, la quantité du ou des élément(s) capable(s) de piéger, chélater et/ou complexer un ou plusieurs ion(s) est typiquement comprise entre 3% et 70% en masse par rapport à la masse totale du premier mélange géopolymérique.

Dans une deuxième variante de cette deuxième forme de mise en œuvre, le monolithe en géopolymère macroporeux et mésoporeux est fonctionnalisé par un ou des élément(s) capable(s) de piéger, chélater et/ou complexer un ou plusieurs ion(s) à l'issue de l'étape a) et préalablement à l'étape b).

Avantageusement, dans cette deuxième variante, ce ou ces élément(s) capable(s) de piéger, chélater et/ou complexer un ou plusieurs ion(s) est/sont choisi(s) dans le groupe constitué par les groupements organiques extractants, les analogues du Bleu de Prusse (ABP) se présentant sous forme de nanoparticules d'un polymère de coordination métallique à ligands CN répondant à la formule [Alk⁺ₓ]Mⁿ⁺[M'(CN)ₘ]^{z-} dans laquelle Alk est un métal alcalin, x est 1 ou 2, M est un métal de transition, n est 2 ou 3, M' est un métal de transition, m est 6 ou 8 et z est 3 ou 4 et leurs mélanges.

En particulier, un groupement organique extractant est choisi dans le groupe constitué par une fonction ammonium, une fonction amine, une fonction amide, une fonction phosphorée, une fonction diglycolamide, une fonction amine ou polyamine à groupements acide acétique, une fonction acide sulfonique, une fonction urée et une fonction de type macromoléculaire ou une fonction polydentée telle qu'un éther couronne, un thioéther-couronne, un calixarène, une porphyrine, une phtalocyanine, une pyrazoline, une phénantroline, un acide éthylènediaminetriacétique, un acide éthylènediaminetetracétique (EDTA). un 1,4,7,10-tétraazacyclododécane-1,4,7,10-tétraacétate (DOTA) et un diéthylène triamine pentaacétate (DTPA). L'homme du métier peut trouver des informations complémentaires quant aux groupements organiques extractants dans la demande internationale WO 2024/023424 A1 **[5]** et aux analogues du Bleu de Prusse dans la demande internationale WO 2016/173950 A1 **[6].**

Dans cette deuxième variante, la fonctionnalisation du monolithe en géopolymère macroporeux et mésoporeux est réalisée par imprégnation de ce monolithe par une ou plusieurs solutions contenant des précurseurs de ces éléments capable(s) de piéger, chélater et/ou complexer un ou plusieurs ion(s). L'homme du métier peut trouver des informations complémentaires quant aux conditions opératoires à utiliser pour cette imprégnation, quant aux précurseurs et quant aux solutions les contenant dans **[5]** et **[6].**

En d'autres termes, la fonctionnalisation du monolithe en géopolymère macroporeux et mésoporeux est réalisée par imprégnation du monolithe avec au moins une solution contenant au moins un précurseur d'un élément choisi parmi les groupements organiques extractants, les analogues du Bleu de Prusse et leurs mélanges.

L'étape b) du procédé selon la présente invention consiste à insérer le monolithe en géopolymère macroporeux et mésoporeux, éventuellement fonctionnalisé dans un support métallique.

Tout support métallique classiquement utilisé dans les dispositifs de filtration et d'extraction est utilisable dans le cadre de la présente invention. Avantageusement, ce support métallique est une cartouche métallique et notamment une cartouche en acier inoxydable.

Lors de l'étape b) du procédé selon la présente invention, il est possible d'utiliser un système de centrage pour garantir un alignement optimal du monolithe dans le support métallique.

Dans le procédé selon la présente invention, l'étape c) vise à assurer une parfaite cohésion entre le monolithe en géopolymère macroporeux et mésoporeux et la paroi interne du support métallique, garantissant ainsi une excellente étanchéité entre la paroi interne du support métallique et la surface externe du monolithe en géopolymère macroporeux et mésoporeux. Cette excellente étanchéité assure le passage des fluides à travers le monolithe en géopolymère macroporeux et mésoporeux, comme illustré dans la partie expérimentale ci-après.

Pour ce faire, on garnit i.e. remplit l'espace entre la surface ou paroi interne du support métallique et le monolithe en géopolymère macroporeux et mésoporeux par un deuxième mélange géopolymérique moyennant quoi, après durcissement de ce deuxième mélange géopolymérique, cet espace est comblé ou rempli par un géopolymère mésoporeux.

Dans la présente invention, les expressions « espace entre le support métallique et le monolithe » et « espace entre la surface ou paroi interne du support métallique et la surface externe du monolithe » sont équivalentes et utilisables de façon interchangeable. Il est évident que la surface externe du monolithe correspond à surface externe en regard de la paroi interne du support métallique.

Typiquement le garnissage ou remplissage se fait en injectant, dans l'espace vide, un deuxième mélange géopolymérique préalablement préparé.

Tout ce qui a été précédemment expliqué pour le premier mélange géopolymérique s'applique *mutatis mutandis* au deuxième mélange géopolymérique notamment en ce qui concerne la solution d'activation, le matériau réactif contenant essentiellement de la silice et de l'aluminium et la préparation du mélange. A noter toutefois qu'il n'est pas nécessaire que le deuxième mélange géopolymérique présente une viscosité et une contrainte seuil bien contrôlées. De fait, ce deuxième mélange géopolymérique ne comprend pas d'agent viscosant tel que précédemment défini.

Par ailleurs, comme la porosité du géopolymère comblant l'espace entre le support métallique et le monolithe est uniquement due au procédé de géopolymérisation, le deuxième mélange géopolymérique ne comprend aucun composant apte à générer une macroporosité.

Dans un mode de réalisation particulier, le matériau réactif contenant essentiellement de la silice et de l'aluminium utilisé dans le deuxième mélange géopolymérique est du métakaolin.

En tenant compte des éventuels composants silicatés que peut contenir la solution d'activation utilisée pour préparer le deuxième mélange géopolymérique, la quantité de source(s) alumino-silicatée(s) est telle que le rapport molaire SiO₂/Al₂O₃ dans le géopolymère mésoporeux entourant le monolithe est compris entre 2.8 et 4.2, notamment entre 3.2 et 4.0 et, en particulier, de l'ordre de 3.4.

De plus, lors de la préparation de ce deuxième mélange géopolymérique, le rapport massique solution activation/MK avec solution d'activation représentant la masse de solution d'activation (exprimée en g) et MK représentant la masse de source alumino-silicatée (exprimée en g) utilisé est avantageusement compris entre 0.90 et 1.76 et notamment entre 1.01 et 1.52. A titre d'exemple particulier, le rapport solution activation/MK est de l'ordre de 1.46.

Les conditionnements mises en œuvre lors du durcissement de ce deuxième mélange géopolymérique et de l'éventuel stockage du dispositif final sont identiques à celles données lors de la préparation du monolithe en géopolymère macroporeux et mésoporeux.

La présente invention concerne également un dispositif de filtration et d'extraction préparé par le procédé de préparation tel que précédemment défini. Ce dispositif comprend un monolithe en géopolymère macroporeux et mésoporeux, contenu dans un support métallique, l'espace entre le monolithe et le support métallique étant comblé ou rempli par un géopolymère mésoporeux.

Dans le dispositif de filtration et d'extraction selon l'invention, le support métallique est avantageusement une cartouche en acier inoxydable.

La présente invention concerne enfin l'utilisation d'un tel dispositif de filtration et d'extraction pour séparer au moins un ion tel qu'un ion métallique ou métalloïde d'un flux contenant ledit au moins un ion tel qu'un ion métallique ou métalloïde.

Ainsi, la présente invention concerne un procédé pour séparer au moins un ion tel qu'un ion métallique ou métalloïde d'un flux contenant ledit au moins un ion tel qu'un ion métallique ou métalloïde consistant à mettre en contact le flux contenant ledit au moins un ion tel qu'un ion métallique ou métalloïde avec le dispositif de filtration et d'extraction selon l'invention, moyennant quoi sont obtenus un flux appauvri en ions tels que des ions métalliques ou métalloïdes et un dispositif avec un monolithe en géopolymère macroporeux et mésoporeux à la surface duquel sont fixés des ions tels que des ions métalliques ou métalloïdes. Cette fixation implique, lorsque le géopolymère du monolithe est fonctionnalisé, les éléments capables de piéger, chélater et/ou complexer un ou plusieurs ion(s) et fonctionnalisant le géopolymère du monolithe.

En d'autres termes, le procédé selon l'invention peut être considéré comme un procédé de traitement d'un flux contenant au moins un ion tel qu'un ion métallique ou métalloïde. Par « traitement d'un flux contenant au moins un ion tel qu'un ion métallique ou métalloïde », on entend diminuer ou réduire la quantité d'ions tels que des ions métalliques ou métalloïdes, présents dans le flux avant la mise en œuvre du procédé selon l'invention i.e. avant la mise en contact avec dispositif de filtration et d'extraction. Cette diminution ou réduction peut impliquer l'élimination partielle ou totale de ces ions dans le flux.

En effet, les excellentes propriétés de tenue et de stabilité mécaniques du monolithe en géopolymère macroporeux et mésoporeux préparé par le procédé selon l'invention, résultant de sa structure spécifique permettent son conditionnement en colonne et la mise en œuvre en continu du procédé de séparation/fixation qui peut ainsi être facilement intégré dans une installation existante, par exemple dans une chaîne ou ligne de traitement comprenant plusieurs étapes.

A l'issue du procédé de séparation selon l'invention, les éléments se trouvant dans le flux à traiter, tels que des anions ou des cations, sont immobilisés, dans le géopolymère macroporeux et mésoporeux du monolithe du dispositif de filtration et d'extraction selon l'invention, par adsorption, par chélation ou par complexation notamment, lorsque ce géopolymère est fonctionnalisé, *via* les éléments capables de piéger, chélater et/ou complexer un ou plusieurs ion(s) et fonctionnalisant le géopolymère macroporeux et mésoporeux.

Par « flux contenant au moins un ion tel qu'un ion métallique ou métalloïde », on entend un flux liquide ou gazeux dans lequel la présente invention vise à séparer, récupérer ou éliminer des ions tels que des ions métalliques ou métalloïdes non souhaités ou, au contraire, des ions tels que des ions métalliques ou métalloïdes d'intérêt. Ainsi, le flux mis en œuvre dans le cadre de la présente invention peut être tout flux liquide ou gazeux susceptible de contenir au moins un ion tel qu'un ion métallique ou métalloïde.

Avantageusement, le flux contenant au moins un ion tel qu'un ion métallique ou métalloïde mis en œuvre dans l'invention est un flux liquide. Ce dernier peut se présenter sous forme d'une solution monophasique, d'une micro-émulsion, d'une suspension et/ou d'une dispersion. Le flux liquide mis en œuvre peut être une solution aqueuse pouvant éventuellement contenir des acides, des bases ou des composés organiques. En variante, cette solution peut également être une solution dans un solvant organique tel que des composés aliphatiques comme des alcanes ou des alcènes, des alcools aliphatiques ou non, des molécules actives tels que, par exemple, des tensioactifs ou des extractants, dans un mélange de ces solvants organiques, ou dans un mélange d'eau et d'un ou de plusieurs de ces solvants organiques.

A titre d'exemples, le flux liquide ou gazeux mis en œuvre dans le cadre de la présente invention peut être choisi dans le groupe constitué par un prélèvement aérien extérieur, un prélèvement aérien provenant d'industries du domaine chimique, agro-alimentaire, pharmaceutique, cosmétique ou nucléaire, de l'eau de ville, de l'eau de rivière, de l'eau de mer, de l'eau de lac, un effluent issu d'une station d'épuration, une eau usée, un effluent liquide ménager, un effluent liquide médical ou hospitalier, un effluent liquide industriel, comme un effluent issu de l'industrie nucléaire ou de toute autre activité liée au nucléaire ou un effluent issu de l'industrie non nucléaire, et un de leurs mélanges.

Parmi les liquides et effluents divers de l'industrie nucléaire, des installations nucléaires et des activités mettant en œuvre des radionucléides qui peuvent être traités par le géopolymère fonctionnalisé préparé par le procédé selon l'invention, on peut citer, par exemple, les eaux de refroidissement des centrales, et tous les effluents divers entrant en contact avec des radio-isotopes tels que toutes les eaux de lavage, les solutions de régénération de résines ou encore les effluents organiques issus des activités de recherche et développement.

Parmi les liquides et effluents divers de l'industrie non nucléaire, on peut citer les effluents de cimenterie contenant du thallium (poison violent) ou encore les effluents de l'industrie papetière.

Ainsi, les flux et solutions qui peuvent être traités avec le monolithe en géopolymère macroporeux et mésoporeux du dispositif selon l'invention fixant des ions tels que des ions métalliques ou métalloïdes, préparé par le procédé selon l'invention sont très variés, et peuvent même contenir, par exemple, des agents extractants compétiteurs, corrosifs, ou autres, du fait de l'excellente stabilité chimique du monolithe en géopolymère macroporeux et mésoporeux mis en œuvre dans l'invention. Le monolithe en géopolymère macroporeux et mésoporeux éventuellement fonctionnalisé préparé par le procédé selon l'invention est utilisable en particulier sur une très large gamme de pH allant, par exemple, d'un pH neutre jusqu'à un pH de 10.

Typiquement, par un choix approprié du ou des éléments capables de piéger, chélater et/ou complexer un ou plusieurs ion(s), à la surface, du géopolymère macroporeux et mésoporeux éventuellement fonctionnalisé du dispositif selon l'invention peut être utilisé pour fixer, chélater, complexer ou encore piéger un quelconque ion. Par « ion », on entend aussi bien un cation qu'un anion, que ces derniers soient des impuretés, des contaminants ou des cations ou anions d'intérêt susceptibles d'être recyclés comme, par exemple, le lithium.

Dans un mode de réalisation particulier, l'ion fixé, chélaté, complexé ou encore piégé par le géopolymère macroporeux et mésoporeux éventuellement fonctionnalisé du dispositif selon l'invention est un ion métallique ou métalloïde.

Par « ion métallique ou métalloïde », on entend, dans le cadre de la présente, invention, un ion métallique ou métalloïde non souhaité tel qu'une impureté ou un contaminant ou, au contraire, un ion métallique ou métalloïde d'intérêt, susceptible d'être présent ou présent dans un flux tel que précédemment défini. Cet ion métallique ou métalloïde peut, en outre, être toxique, nocif et/ou radioactif.

La présente invention peut être mise en œuvre avec tout ion métallique ou métalloïde connu de l'homme du métier. Avantageusement, l'ion métallique est un ion d'un métal pauvre, un ion d'un métal alcalino-terreux, un ion d'un métal de transition, un ion d'un actinide ou d'un ion d'un lanthanide. Parmi les ions métalliques ou métalloïdes concernés par la présente invention, on trouve également les ions d'un métal lourd ou d'un métalloïde lourd. Pour rappel, un métal ou métalloïde lourd est un élément métallique ou métalloïde dont la masse volumique dépasse 5 g/cm³ tel que le mercure, le plomb, le cadmium, le cuivre, l'arsenic, le nickel, le zinc, le cobalt et le manganèse.

Avantageusement, l'ion métallique ou métalloïde, dans le cadre de la présente invention, est un ion d'un métal ou d'un métalloïde tel que précédemment défini présentant un degré d'oxydation supérieur ou égal à 1, notamment supérieur ou égal à 2. L'ion métallique ou métalloïde peut notamment être un ion d'un radionucléide.

A titre d'exemples illustratifs, l'ion métallique ou métalloïde peut être, dans le cadre de la présente invention, un ion d'un élément choisi parmi le mercure, l'or, l'argent, le platine, le plomb, le fer, l'indium, le gallium, l'aluminium, le bismuth, l'étain, le cadmium, le cuivre, le lithium, l'arsenic, le nickel, le zinc, le titane, le cobalt, le manganèse, le palladium, le curium, l'américium, le radium, le ruthénium, le thorium, l'uranium, le plutonium, l'actinium, l'ytterbium, l'erbium, le terbium, le gadolinium, l'europium, le néodyme, le praséodyme, le cérium, le césium, le thallium, le strontium et le lanthane.

Dans le cadre de la présente invention, l'ion tel qu'un ion métallique ou métalloïde peut se présenter sous forme libre sous forme de colloïdes ou sous forme complexée. Dans le cadre d'un ion métallique ou métalloïde, ce dernier peut provenir d'un métal ou métalloïde stable ou d'un de ses isotopes radioactifs.

L'ion tel qu'un ion métallique ou métalloïde peut être présent dans le flux à traiter sous forme très diluée ou beaucoup plus concentrée. Ainsi, la quantité dudit ion dans un flux liquide à traiter peut être comprise entre 1 pg à 100 mg/L de flux liquide, notamment entre 1 µg à 10 mg/L de flux liquide et, en particulier, entre 10 µg à 1 mg/L de flux liquide.

Typiquement, le procédé de séparation qui met en œuvre un géopolymère macroporeux et mésoporeux éventuellement fonctionnalisé du dispositif de la présente invention est mis en œuvre en continu.

Le temps de contact du flux à traiter avec le géopolymère macroporeux et mésoporeux éventuellement fonctionnalisé du dispositif objet de la présente invention est variable et peut aller, par exemple, de 1 min à 36 h et, par exemple, de 24 h.

Par ailleurs, comme le géopolymère macroporeux et mésoporeux éventuellement fonctionnalisé du dispositif se présente sous forme de monolithe, ce dernier peut être utilisé comme un matériau de conditionnement piégeant les éléments contenus dans ce conditionnement et susceptibles de s'écouler en-dehors de ce dernier.

D'autres avantages et caractéristiques de l'invention ressortiront mieux à la lecture de la description détaillée d'exemples de mise en œuvre de l'invention faite à titre illustratif et non limitatif en référence aux figures suivantes.

### BRÈVE DESCRIPTION DES DESSINS

La Figure 1 présente une schématisation du procédé de préparation d'un dispositif de filtration et d'extraction selon l'invention.
La Figure 2A présente le filtre de géopolymère fabriqué par impression 3D.
La Figure 2B présente le système de centrage pour permettre d'aligner complétement le filtre dans la cartouche.
La Figure 3 présente une cartouche métallique avec des filetages et un joint torique pour permettre le raccord dans le système de filtration utilisé lors de l'étape de mise en service.
La Figure 4 présente le montage de recirculation d'effluent utilisé lors de l'étape de mise en service de la cartouche filtrante selon l'invention.
La Figure 5 présente une section de la cartouche après 24h de recirculation d'une solution de cuivre à 0,1 mol/L.

### EXPOSÉ DÉTAILLÉ DE MODES DE RÉALISATION PARTICULIERS

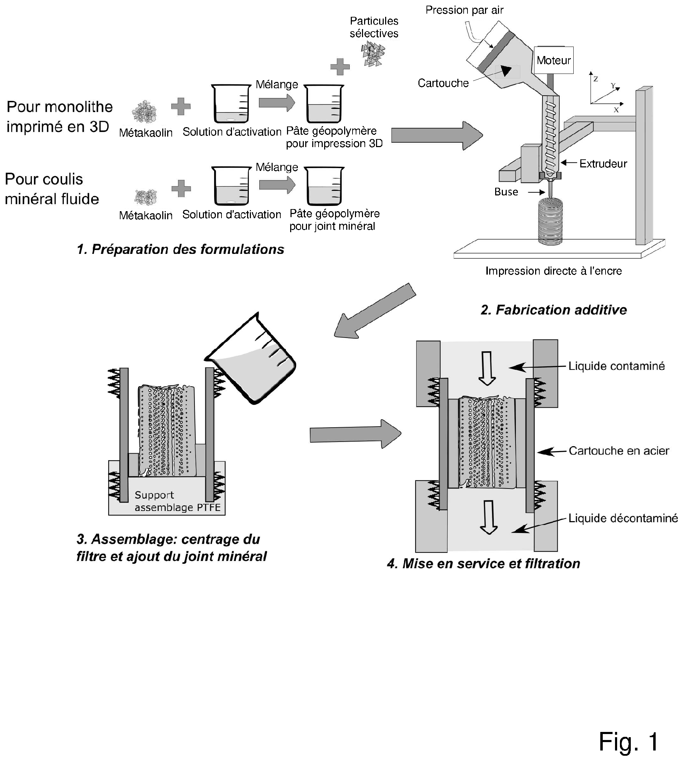

Le procédé ci-après illustrant l'invention comprend quatre étapes principales représentées à la Figure 1 :
1. Préparation de la pâte de géopolymère pour impression 3D et pour le joint d'étanchéité de la cartouche ;
2. Fabrication d'un filtre par impression 3D + Solidification du filtre géopolymère ;
3. Assemblage du filtre dans la cartouche métallique grâce au joint en géopolymère ; et
4. Mise en service de la cartouche filtrante.

### Étape 1 : Préparation de la pâte de géopolymère

L'objectif de cette étape 1 est de préparer une pâte de géopolymère avec des propriétés rhéologiques optimisées pour l'impression 3D.

### Formulation de la pâte :

- Masse totale préparée : 1069 g
- Précurseur solide : 399,38 g de métakaolin (poudre alumino-silicatée M1000, Imerys, d50 = 5 µm)
- Solution d'activation : 522,91 g d'une solution aqueuse de NaOH à 10,1 mol/L et Si₂O à 8,97 mol/L préparé à partir d'une solution commerciale de silicate de potassium (Betol 52 T, Woellner) (30,2wt% SiO₂, 14,7wt% NaOH et 55,1wt% H₂O), des pastilles d'hydroxyde de sodium (Fisher Scientific, UK) et de l'eau déminéralisée.
- Additifs :
   235,28 g de Calcite (Betocarb) (poudre d50 = 8 µm)
   18,47 g de Polyéthylène glycol à masse moléculaire de 1500 g/mol (PEG 1500, Fisher Scientific, UK)

### Procédure :

On dissout 18,31 g pastilles de NaOH et de 18,47 g de PEG 1500 dans 4,61 g d'eau déminéralisé et 500 g de la solution de silicate de sodium. Une fois les pastilles de NaOH et le PEG bien dissous, on ajoute progressivement du métakaolin sous agitation mécanique (agitateur à hélice, 300 tr/min). On introduit ensuite les particules de calcite. Puis, l'ensemble est mélangé pendant 5 minutes pour obtenir une pâte homogène.

### Propriétés rhéologiques de la pâte :

- Module élastique dans domaine linéaire après gâchage : 5,2*10⁵ Pa
- Contrainte seuil après gâchage : 920 Pa.

Cette formulation permet la fabrication de filtres cylindriques de 80 mm de hauteur sans défaut de flambage ni effondrement des premières couches sous leur propre poids. Étant donné que le temps de prise est de plusieurs heures, les propriétés rhéologiques définissent les limites dimensionnelles des filtres pour respecter les exigences du cahier des charges (variation entre le diamètre des parties haute et basse du filtre, inclinaison maximale due au flambage, connectivité des pores). Si la taille du filtre dépasse les limites imposées par la rhéologie de la pâte, une étape supplémentaire de superposition des filtres, après séchage, est nécessaire pour éviter les défauts de flambage ou le phénomène de « pied d'éléphant ».

### Étape 1 bis : Préparation de la pâte de géopolymère pour le joint d'étanchéité de la cartouche

### Formulation de la pâte :

- Masse totale préparée : 226,31 g
- Précurseur solide : 90,01 g de métakaolin (poudre alumino-silicatée M1000, Imerys, d50 = 5 µm)
- Solution d'activation : 131,78 g d'une solution aqueuse de NaOH à 7,94 mol/L et Si₂O à 6,26 mol/L préparée à partir d'une solution commerciale de silicate de sodium (Betol 52 T, Woellner) (30.2wt% SiO₂, 14.7wt% NaOH et 55.1wt% H₂O), des pastilles d'hydroxyde de sodium (Fisher Scientific, UK) et de l'eau déminéralisée.

### Procédure :

On dissout 6,53 g pastilles de NaOH dans 25,25 g d'eau déminéralisée et 100 g de la solution de silicate de sodium. Une fois les pastilles de NaOH bien dissoutes, on ajoute progressivement du métakaolin sous agitation mécanique (agitateur à hélice, 300 tr/min). Puis, l'ensemble est mélangé pendant 5 minutes pour obtenir une pâte homogène.

### Étape 2 : Fabrication d'un filtre par impression 3D

L'objectif de cette étape 2 est de fabriquer un filtre cylindrique avec une hauteur, un diamètre, une taille de pores et une porosité précis.

### Paramètres d'impression 3D :

- Imprimante utilisée : Lutum 5, alimentation assurée par piston à air comprimé et vis sans fin.
- Dimensions du filtre : 30 mm de diamètre et 80 mm d'hauteur, pores de 0.8-1.2 mm.
- Diamètre de buse : 0,8 mm.
- Hauteur de couche : 0,4 mm.
- Nombre de parois : 0.
- Taux de remplissage : 50%
- Motif de remplissage : rectiligne 0/90
- Vitesse d'impression de paroi : 24 mm/s
- Vitesse de remplissage : 30 mm/s
- Temps d'impression : 30 min.

### Conditions opératoires de la solidification du filtre géopolymère :

La solidification du filtre géopolymère est réalisée dans une enceinte qui permet de contrôler de manière précise la température et l'humidité de l'air. Ainsi, le temps de prise à 25°C est de 12 h à humidité ambiante et de 7 jours à humidité à 98%.

### Étape 3 : Assemblage du filtre dans la cartouche métallique

L'objectif de cette étape 3 est d'assurer l'étanchéité du filtre dans la cartouche métallique.

### Procédure :

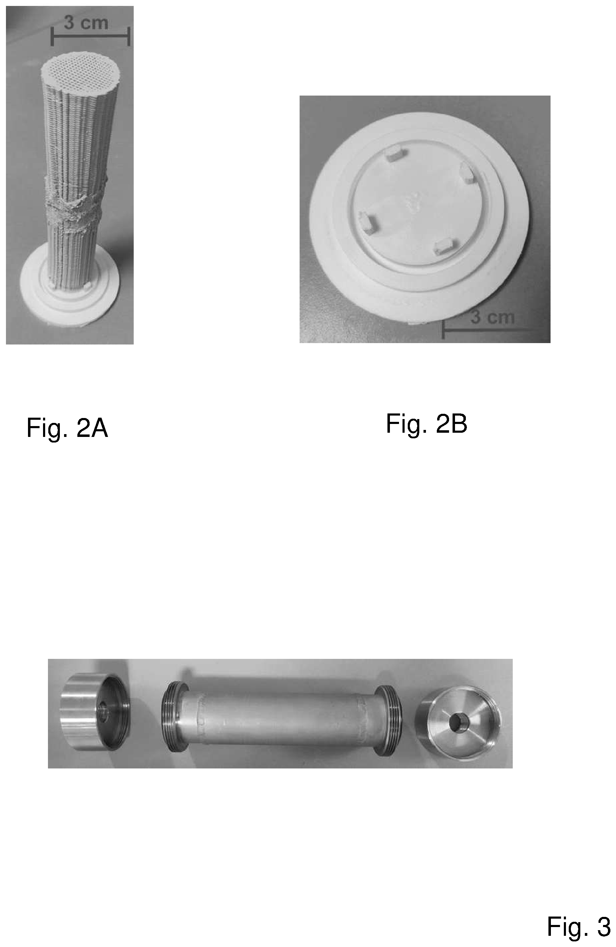

On superpose deux filtres de 8 cm pour obtenir un filtre de 16 cm (voir Figure 2A). A l'aide d'un système de centrage (voir Figure 2B), le filtre en géopolymère est aligné dans le centre de la cartouche métallique. On injecte la pâte de géopolymère préparée à l'étape 1 bis pour fixer le filtre. Le système est conservé, dans une enceinte à température et humidité contrôlées, à 25°C et humidité à 98% pendant 7 jours.

### Étape 4 : Mise en service de la cartouche filtrante

Grâce à un filetage des deux extrémités de la cartouche, la cartouche est raccordée dans un montage qui permet la circulation en continu d'un fluide à travers le filtre (Voir Figure 3).

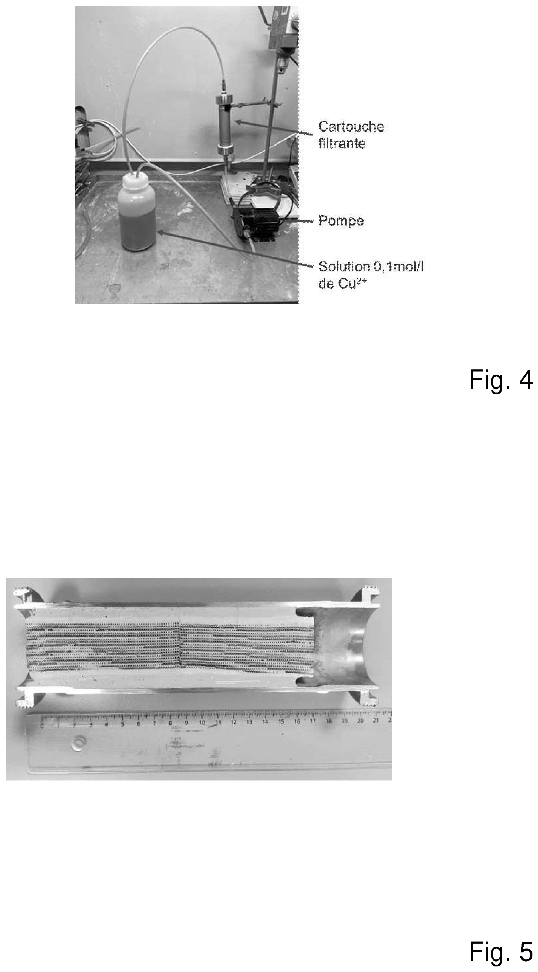

Afin de démontrer la faisabilité du montage et pour l'aspect visuel, il a été opéré de la façon suivante : une solution de CuCl₂ à 0,1 mol/L (couleur bleue) est mise en circulation en circuit fermé pendant 24 heures à l'aide d'une pompe. La Figure 4 montre le montage utilisé. La solution initiale contient un total de 6 g d'ions Cu²⁺.

Après 24 heures de recirculation, une analyse par spectrométrie à plasma indique que la concentration de CuCl₂ dans la solution est réduite à 0,07 mol/L. La concentration finale en ions Cu²⁺ est de 4,4 g/L, confirmant une capacité d'adsorption du filtre de 30 mg/g.

La Figure 5 montre une section de la cartouche filtrante après 24 heures de recirculation de la solution de CuCl₂. La coloration bleue observée dans la section du filtre atteste d'une bonne accessibilité des pores par le fluide, garantissant ainsi une diffusion homogène et un échange efficace des ions Cu²⁺ avec le matériau adsorbant. Notons également que le joint minéral n'est pas coloré du tout ce qui confirme une excellente étanchéité.

A noter que, lors de l'étape 1, l'additif minéral choisi est la calcite. Celle-ci peut être remplacée aisément par des particules sélectives permettant un piégeage en continu des éléments d'intérêt comme des éléments radioactifs.

### Références

**[1]** Demande internationale WO 2024/126963
**[2]** Brevet CN 107973559 B
**[3]** Brevet FR 3037583 B1
**[4]** Luukkonen et al, 2020, "Ag- or Cu-modified geopolymer filters for water treatment manufactured by 3D printing, direct foaming, or granulation", Scientific Reports, vol. 10, pages 1-14.
**[5]** Demande internationale WO 2024/023424 A1
**[6]** Demande internationale WO 2016/173950 A1

## Revendications

1. Procédé de préparation d'un dispositif de filtration ou d'extraction comprenant un monolithe en géopolymère macroporeux et mésoporeux, contenu dans un support métallique comportant au moins les étapes suivantes :
a) préparer un monolithe en géopolymère macroporeux et mésoporeux par impression 3D à partir d'un premier mélange géopolymérique ;
b) introduire, dans un support métallique, le monolithe en géopolymère macroporeux et mésoporeux préparé à l'étape a) ; puis
c) garnir l'espace vide entre la surface interne du support métallique et le monolithe en géopolymère macroporeux et mésoporeux par un deuxième mélange géopolymérique moyennant quoi, après durcissement dudit deuxième mélange géopolymérique, un dispositif de filtration ou d'extraction comprenant un monolithe en géopolymère macroporeux et mésoporeux, contenu dans un support métallique est obtenu.

2. Procédé de préparation selon la revendication 1, **caractérisé en ce que** ladite étape a) comporte les sous-étapes suivantes :
a₁) préparer un premier mélange géopolymérique ;
b₁) soumettre le premier mélange géopolymérique préparé à l'étape a₁) à une impression 3D ; et
c₁) laisser durcir le premier mélange géopolymérique imprimé à l'étape b₁) moyennant quoi un monolithe en géopolymère macroporeux et mésoporeux est obtenu.

3. Procédé de préparation selon la revendication 1 ou 2, **caractérisé en ce que** l'étape a₁) consiste à ajouter, à une solution d'activation préalablement préparée, au moins une source alumino-silicatée.

4. Procédé selon la revendication 3, **caractérisé en ce que** ladite source alumino-silicatée est du métakaolin.

5. Procédé selon l'une quelconque des revendications 1 à 4, **caractérisé en ce que** ledit premier mélange géopolymérique comprend, comme agent viscosant, du polyéthylène glycol et des fines sous forme de particules de calcite (CaCO₃).

6. Procédé selon l'une quelconque des revendications 1 à 5, **caractérisé en ce que** le premier mélange géopolymérique comprend au moins un élément capable de piéger, chélater et/ou complexer un ou plusieurs ion(s).

7. Procédé selon l'une quelconque des revendications 1 à 5, **caractérisé en ce que** le monolithe en géopolymère macroporeux et mésoporeux est fonctionnalisé par un ou des élément(s) capable(s) de piéger, chélater et/ou complexer un ou plusieurs ion(s) à l'issue de l'étape a) et préalablement à l'étape b).

8. Dispositif de filtration et d'extraction préparé par un procédé de préparation selon l'une quelconque des revendications 1 à 7, **caractérisé en ce que** ledit dispositif comprend un monolithe en géopolymère macroporeux et mésoporeux, contenu dans un support métallique, l'espace entre le monolithe et le support métallique étant rempli par un géopolymère mésoporeux.

9. Dispositif de filtration et d'extraction selon la revendication 8, caractérisé en ce ledit support métallique est une cartouche en acier inoxydable.

10. Utilisation d'un dispositif de filtration et d'extraction selon la revendication 8 ou 9, pour séparer au moins un ion d'un flux contenant ledit au moins un ion.

11. Utilisation selon la revendication 10, **caractérisée en ce que** ledit flux contenant au moins un ion est choisi dans le groupe constitué par un prélèvement aérien extérieur, un prélèvement aérien provenant d'industries du domaine chimique, agro-alimentaire, pharmaceutique, cosmétique ou nucléaire, de l'eau de ville, de l'eau de rivière, de l'eau de mer, de l'eau de lac, un effluent issu d'une station d'épuration, une eau usée, un effluent liquide ménager, un effluent liquide médical ou hospitalier, un effluent liquide industriel et un de leurs mélanges.

12. Utilisation selon la revendication 10 ou 11, **caractérisée en ce que** ledit ion est un ion métallique ou métalloïde.

13. Utilisation selon la revendication 12, **caractérisée en ce que** ledit ion métallique ou métalloïde est un ion d'un élément choisi parmi le mercure, l'or, l'argent, le platine, le plomb, le fer, l'indium, le gallium, l'aluminium, le bismuth, l'étain, le cadmium, le cuivre, le lithium, l'arsenic, le nickel, le zinc, le titane, le cobalt, le manganèse, le palladium, le curium, l'américium, le radium, le ruthénium, le thorium, l'uranium, le plutonium, l'actinium, l'ytterbium, l'erbium, le terbium, le gadolinium, l'europium, le néodyme, le praséodyme, le cérium, le césium, le thallium, le strontium et le lanthane.
